# EUROPEAN PATENT SPECIFICATION

(11) **EP 3 805 315 B1**
(45) Date of publication and mention of the grant of the patent: **27.04.2022**
(21) Application number: 19882755.2
(22) Date of filing: 06.11.2019
(51) Int. Cl.: C08L 69/00, C08K 5/42, C08K 5/1515, C08K 5/5415, C08G 64/16, C08L 83/04, C08G 64/06, C08K 5/132, C08K 5/105, C08K 5/3475

(54) **POLYCARBONATE RESIN COMPOSITION AND ARTICLE COMPRISING SAME**
POLYCARBONATHARZZUSAMMENSETZUNG UND ARTIKEL DAMIT
COMPOSITION DE RÉSINE DE POLYCARBONATE ET ARTICLE COMPRENANT CELLE-CI

(30) Priority: 06.11.2018 KR 20180135446; 06.11.2018 KR 20180135445; 05.11.2019 KR 20190140503
(43) Date of publication of application: 14.04.2021
(73) Proprietor: LG CHEM, LTD., Yeongdeungpo-gu, Seoul 07336 (KR)
(72) Inventor: BAHN, Hyong Min, Daejeon 34122 (KR); KO, Un, Daejeon 34122 (KR); BAE, Jungmoon, Daejeon 34122 (KR); HWANG, Daehyeon, Daejeon 34122 (KR); HONG, Mooho, Daejeon 34122 (KR); YUM, Sugil, Daejeon 34122 (KR)
(74) Representative: Goddar, Heinz J.
(86) International application number: PCT/KR2019/014995
(87) International publication number: WO 2020/096352

(56) References cited:
- WO-A1-2014/201224
- JP-A- 2010 065 164
- JP-A- 2013 107 979
- KR-A- 20160 030 126
- KR-A- 20180 037 506
- KR-A- 20180 047 837
- US-A1- 2012 202 034
- US-B2- 9 664 818

## Description

### BACKGROUND OF THE INVENTION

### (a) Field of the Invention

### Cross-reference to Related Application

The present application is based on, and claims priority from, Korean Patent Application Nos. 10-2018-0135445, 10-2018-0135446, and 10-2019-0140503, filed on November 6, 2018, November 6, 2018, and November 5, 2019, respectively.

The present invention relates to a polycarbonate resin composition and a molded article including the same. More particularly, the present invention relates to a polycarbonate resin composition having excellent processability and excellent flame retardancy, weather resistance, and transparency, and a molded article produced therefrom.

### (b) Description of the Related Art

A polycarbonate resin is prepared by condensation polymerization of an aromatic diol such as bisphenol A with a carbonate precursor such as phosgene, and has excellent impact strength, dimensional stability, heat resistance, transparency, etc., and is applied to a wide range of fields such as exterior materials for electrical and electronic products, automobile components, building components, optical components, etc.

In particular, with recent development of lightweight and thinner materials for various electrical and electronic products, polycarbonate resins to be applied thereto are required to have a higher level of flame retardancy.

In order to increase the flame retardancy of polycarbonate, researches have been conducted on the use of Br- or Cl-based flame retardants. However, the flame retardation by the corresponding flame retardants has been increasingly prohibited due to toxicity and environmental problems caused by generation of harmful gas. Particularly, products exported to European Union countries are highly regulated, and in the future, small-scale interior/exterior material products are expected to be fully regulated.

Accordingly, studies are being conducted on a material capable of replacing the above flame retardants, and examples thereof include sulfonic acid-based metal salts. Examples of such sulfonic acid-based metal salts include potassium perfluoro butane sulfonate (KFBS), potassium diphenyl sulfonate (KSS), etc. US Patent No. 3,775,367 describes that such metal salts are used in polycarbonate resins to maintain the excellent flame-retardance of UL-94 V0 grade, and heat resistance and impact strength. According to US Patent No. 3,775,367, even when a thin molded article having a thickness of about 4 mm is produced by using such a metal salt in a small amount of 0.5% by weight or more, based on the total weight of the composition, UL-94 V0-rated flame-retardancy may be obtained. When thinner molded articles are produced, the content of the metal salt must be increased in order to obtain the desired flame retardancy. However, an excessive amount of the metal salt causes decomposition of the polycarbonate resin, leading to reduction of flame retardancy.

Techniques of using silicon compounds have been reported as alternative methods of obtaining flame retardancy and heat resistance using other flame retardants than Br- or Cl-based flame retardants (WO 99/028387). However, even in this case, it is difficult to obtain excellent flame retardancy at a thickness of about 2 mm, and there is a problem in that heat resistance decreases when the content of the flame retardant is increased in order to improve flame retardancy.

Further, low-molecular-weight decomposition products accelerate the decomposition of the resin during combustion, which drastically lowers viscosity of the resin, resulting in a dripping phenomenon in which sparks fall down. To prevent this phenomenon, an anti-dripping agent is often added. However, since the existing anti-dripping agent reduces transparency of the resin composition, it is not easy to meet the anti-dripping property while maintaining the transparency

Flame-retardant polycarbonate resin compositions having high light transmittance are described in US9664818.

### [Prior Art Documents]

### [Patent Documents]

(Patent Document 0001) U.S. Pat. No. 3,775,367
(Patent Document 0002) WO 99/028387

### SUMMARY OF THE INVENTION

Accordingly, the present invention provides a polycarbonate resin composition exhibiting excellent processability, flame retardancy, weather resistance, and transparency.

Further, the present invention provides a molded article including the polycarbonate resin composition.

To achieve the above objects, the present invention provides a polycarbonate resin composition including the following components:
(a) a linear polycarbonate resin including a first repeating unit represented by the following Chemical Formula 1;
(b) a branched polycarbonate resin including the first repeating unit represented by the following Chemical Formula 1;
   based on 100 parts by weight of the linear polycarbonate resin and the branched polycarbonate resin,
(c) 0.04 parts by weight to 0.15 parts by weight of a fluorinated sulfonate-based metal salt;
(d) 1.5 parts by weight to 5.0 parts by weight of phenyl methyl silicone oil having a kinematic viscosity of 5 mm²/sec to 60 mm²/sec at 25°C; and
(e) 0.05 parts by weight to 0.2 parts by weight of a phenyl methyl silicone resin; 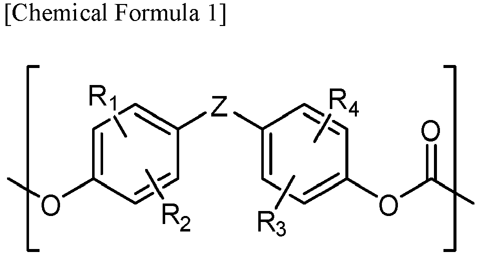 in Chemical Formula 1,
   R₁ to R₄ are each independently hydrogen, C₁₋₁₀ alkyl, C₁₋₁₀ alkoxy, or halogen, and
   Z is C₁₋₁₀ alkylene unsubstituted or substituted with phenyl, C₃₋₁₅ cycloalkylene unsubstituted or substituted with C₁₋₁₀ alkyl, O, S, SO, SO₂, or CO.

Further, the present invention provides a molded article including the polycarbonate resin composition.

The polycarbonate resin composition according to the present invention and the molded article thereof may exhibit excellent processability, flame retardancy, weather resistance, and transparency.

Accordingly, the polycarbonate resin composition of the present invention and the molded article thereof are suitable for blow molding and injection molding processes, and may be appropriately used as a material for electrical and electronic parts, parts for lighting equipment, etc.

### DETAILED DESCRIPTION OF THE EMBODIMENTS

While the present invention is susceptible to various modifications and alternative forms, specific embodiments will be illustrated and described in detail as follows. It should be understood, however, that the description is not intended to limit the present invention to the particular forms disclosed, but on the contrary, the intention is to cover all modifications, and alternatives falling within the scope of the present invention

Hereinafter, a polycarbonate resin composition according to specific embodiments of the present invention and a molded article thereof will be described in more detail.

First, the terminology used herein is used for the purpose of describing particular embodiments only, and is not intended to limit the present invention. The singular expression used herein may include the plural expression unless it is differently expressed contextually.

### Polycarbonate resin composition

A polycarbonate resin composition according to one embodiment of the present invention may include:
(a) a linear polycarbonate resin including a first repeating unit represented by the following Chemical Formula 1;
(b) a branched polycarbonate resin including the first repeating unit represented by the following Chemical Formula 1;
   based on 100 parts by weight of the linear polycarbonate resin and the branched polycarbonate resin,
(c) 0.04 parts by weight to 0.15 parts by weight of a fluorinated sulfonate-based metal salt;
(d) 1.5 parts by weight to 5.0 parts by weight of phenyl methyl silicone oil having a kinematic viscosity of 5 mm²/sec to 60 mm²/sec at 25°C; and
(e) 0.05 parts by weight to 0.2 parts by weight of a phenyl methyl silicone resin: 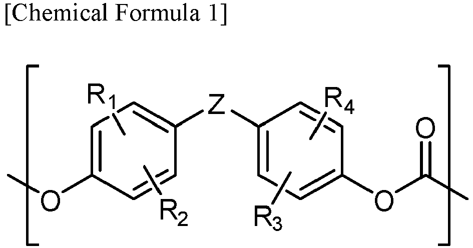 in Chemical Formula 1,
   R₁ to R₄ are each independently hydrogen, C₁₋₁₀ alkyl, C₁₋₁₀ alkoxy, or halogen, and
   Z is C₁₋₁₀ alkylene unsubstituted or substituted with phenyl, C₃₋₁₅ cycloalkylene unsubstituted or substituted with C₁₋₁₀ alkyl, O, S, SO, SO₂, or CO.

The polycarbonate resin composition according to one embodiment of the present invention includes the linear polycarbonate resin and the branched polycarbonate resin at the same time. The branched polycarbonate resin includes the first repeating unit as a basic main chain, and has a structure in which a plurality of the first repeating units are connected to each other via the branched second repeating unit according to a branching agent included during polymerization, and thus an entanglement phenomenon is enhanced. Therefore, as compared with the use of the linear polycarbonate resin alone, the polycarbonate resin composition may have excellent melt strength, thereby exhibiting more excellent processability at the time of blow molding.

Further, the polycarbonate resin composition according to the present invention includes the linear polycarbonate resin and the branched polycarbonate resin, together with a fluorinated sulfonate-based metal salt, phenyl methyl silicone oil, and a phenyl methyl silicone resin as flame retardants. Due to interactions therebetween, the polycarbonate resin composition may exhibit flame-retardancy of UL-94 V0 grade while exhibiting excellent fluidity, processability, weather resistance, and transparency.

Accordingly, the polycarbonate resin composition according to one embodiment of the present invention may be, but is not limited to, used as a material for electrical and electronic parts, parts for lighting equipment, etc. which are required to have the above properties.

Hereinafter, the polycarbonate resin composition according to one embodiment of the present invention will be described in more detail.

### (a) Linear polycarbonate resin

The 'linear polycarbonate resin' according to the present invention refers to a resin including the polycarbonate-based first repeating unit represented by Chemical Formula 1, and is distinguished from the branched polycarbonate resin in that it does not include a branched repeating unit described below.

Specifically, the repeating unit represented by Chemical Formula 1 is formed by reacting an aromatic diol compound with a carbonate precursor.

In Chemical Formula 1, preferably, R₁ to R₄ are each independently hydrogen, methyl, chloro, or bromo.

Further, preferably, Z is linear or branched C₁₋₁₀ alkylene unsubstituted or substituted with phenyl, and more preferably, methylene, ethane-1,1-diyl, propane-2,2-diyl, butane-2,2-diyl, 1-phenylethane-1,1-diyl, or diphenyl methylene. Further, Z is preferably cyclohexane-1,1-diyl, O, S, SO, SO₂, or CO.

The repeating unit represented by Chemical Formula 1 may be derived from an aromatic diol compound represented by the following Chemical Formula 1-1: 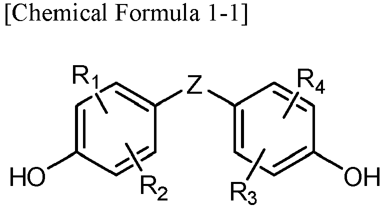 in Chemical Formula 1-1, R₁ to R₄ and Z are the same as defined in Chemical Formula 1.

Non-limiting examples of the repeating unit represented by Chemical Formula 1 may be derived from one or more aromatic diol compounds selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and a,ω-bis[3-(o-hydroxyphenyl)propyl]polydimethyl siloxane.

The phrase 'derived from aromatic diol compounds' means that a hydroxy group of the aromatic diol compound represented by Chemical Formula 1-1 are reacted with the carbonate precursor to form the repeating unit represented by Chemical Formula 1.

For non-limiting example, when bisphenol A which is an aromatic diol compound is polymerized with triphosgene which is a carbonate precursor, the repeating unit represented by Chemical Formula 1 may be represented by the following Chemical Formula 1-2:

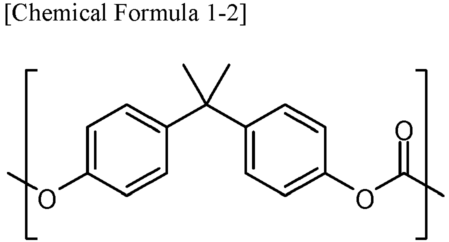

As the carbonate precursor, one or more selected from the group consisting of dimethyl carbonate, diethyl carbonate, dibutyl carbonate, dicyclohexyl carbonate, diphenyl carbonate, ditolyl carbonate, bis(chlorophenyl) carbonate, di-m-cresyl carbonate, dinaphthyl carbonate, bis(diphenyl) carbonate, phosgene, triphosgene, diphosgene, bromophosgene and bishaloformate may be used. Preferably, triphosgene or phosgene may be used.

The linear polycarbonate resin may have a weight average molecular weight (Mw) of 1,000 g/mol to 100,000 g/mol, preferably 10,000 g/mol to 60,000 g/mol, and more preferably 15,000 g/mol to 50,000 g/mol. More preferably, the weight average molecular weight (Mw) is 17,000 g/mol or more, 18,000 g/mol or more, or 20,000 g/mol or more. Further, the weight average molecular weight is 43,000 g/mol or less, 42,000 g/mol or less, or 41,000 g/mol or less. In this regard, the weight average molecular weight refers to a converted value with respect to a standard polycarbonate (PC Standard), as measured by GPC (gel permeation chromatography).

Further, the linear polycarbonate resin has a melt index (MI) of 2 g/10 min to 50 g/10 min, or 3 g/10 min to 40 g/10 min according to ASTM D1238 (as measured at 300°C and a load of 1.2 kg for 10 minutes), which is preferred in terms of stable expression of physical properties of the resin composition.

Further, the linear polycarbonate resin may be included in an amount of 50% by weight to 80% by weight, or 50% by weight to 70% by weight, or 55% by weight to 65% by weight, based on the total weight of the linear polycarbonate resin and the branched polycarbonate resin.

If the content of the linear polycarbonate resin is too small, there is a problem in that processability may be reduced. On the contrary, if the content of the linear polycarbonate resin is too large, there is a problem in the effect of preventing dripping.

Meanwhile, the above-described linear polycarbonate resin may be directly prepared according to a known method of polymerizing a general aromatic polycarbonate resin using the aromatic diol compound represented by Chemical Formula 1-1 and a carbonate precursor as starting materials.

As the polymerization method, for example, an interfacial polymerization method may be used. In this case, the polymerization reaction may be carried out at an atmospheric pressure and a low temperature, and it is easy to control a molecular weight. The interfacial polymerization may be preferably conducted in the presence of an acid binder and an organic solvent. Furthermore, the interfacial polymerization may include, for example, the steps of conducting pre-polymerization, adding a coupling agent, and then conducting polymerization again. In this case, a polycarbonate having a high molecular weight may be obtained.

The materials used in the interfacial polymerization are not particularly limited as long as they may be used in the polymerization of polycarbonates. The used amounts thereof may be adjusted as required.

The acid binder may include, for example, alkali metal hydroxides such as sodium hydroxide, potassium hydroxide, etc., or amine compounds such as pyridine, etc.

The organic solvent is not particularly limited as long as it is a solvent that is usually used in the polymerization of polycarbonates. For example, halogenated hydrocarbons such as methylene chloride, chlorobenzene, etc., may be used.

Further, during the interfacial polymerization, a reaction accelerator, for example, a tertiary amine compound, a quaternary ammonium compound, or a quaternary phosphonium compound, such as triethylamine, tetra-n-butylammonium bromide, tetra-n-butylphosphonium bromide, etc., may be further used for accelerating the reaction.

In the interfacial polymerization, a reaction temperature may be preferably 0°C to 40°C, and a reaction time may be preferably 10 minutes to 5 hours. Further, during the interfacial polymerization reaction, pH may be preferably maintained at 9 or more, or 11 or more.

In addition, the interfacial polymerization reaction may be carried out by further including a molecular weight modifier. The molecular weight modifier may be added before the initiation of polymerization, during the initiation of polymerization, or after the initiation of polymerization.

As the molecular weight modifier, mono-alkyl phenol may be used. For example, the mono-alkyl phenol is one or more selected from the group consisting of p-tert-butyl phenol, p-cumyl phenol, decyl phenol, dodecyl phenol, tetradecyl phenol, hexadecyl phenol, octadecyl phenol, eicosyl phenol, docosyl phenol, and triacontyl phenol. Preferably, the mono-alkyl phenol may be p-tert-butylphenol, and in this case, the effect of adjusting the molecular weight is great.

The molecular weight modifier may be, for example, included in an amount of 0.01 part by weight or more, 0.1 part by weight or more, or 1 part by weight or more, and 10 parts by weight or less, 6 parts by weight or less, or 5 parts by weight, based on 100 parts by weight of the aromatic diol compound. Within the above range, a desired molecular weight may be obtained.

### (b) Branched polycarbonate resin

The 'branched polycarbonate resin' according to the present invention refers to a branched polycarbonate resin including the polycarbonate-based first repeating unit represented by Chemical Formula 1. More specifically, it refers to a copolycarbonate resin further including a trivalent or tetravalent branched second repeating unit connecting a plurality of the first repeating units to each other, in addition to the polycarbonate-based first repeating unit represented by Chemical Formula 1.

The first repeating unit is the same as described above.

Further, the trivalent or tetravalent second repeating unit refers to a repeating unit formed by being grafted as branches onto a main chain by a branching agent which is added during polymerization of the aromatic diol compound represented by Chemical Formula 1-1 and the carbonate precursor.

Specifically, the trivalent or tetravalent second repeating unit may be derived from a branching agent which is a phenol derivative compound having three or four hydroxyl groups, for example, one or more branching agents selected from the group consisting of 1,1,1-tris(4-hydroxyphenyl)ethane, 1,3,5-tris-(2-hydroxyethyl)cyanuric acid, 4,6-dimethyl-2,4,6-tris-(4-hydroxyphenyl)-heptane-2,2,2-bis[4,4'-(dihydroxyphenyl)cyclohexyl] propane, 1,3,5-trihydroxybenzene, 1,2,3-trihydroxybenzene, 1,4-bis-(4',4''-dihydroxytriphenyl methyl)-benzene, 2',3',4'-trihydroxyacetophenone, 2,3,4-trihydroxybenzoic acid, 2,3,4,-trihydroxybenzophenone, 2,4,4'-trihydroxybenzophenone, 2',4',6'-trihydroxy-3-(4-hydroxyphenyl)propiophenone, pentahydroxyflavone, 3,4,5-trihydroxyphenylethylamine, 3,4-trihydroxyphenylethylalcohol, 2,4,5-trihydroxypyrimidine, tetrahydroxy-1,4-quinone hydrate, 2,2',4,4'-tetrahydroxybenzophenone, and 1,2,5,8-tetrahydroxyanthraquinone.

The phrase 'derived from a branching agent' means that three or four hydroxyl groups of the above-described branching agent are reacted with the carbonate precursor to be graft-polymerized with a plurality of the repeating units represented by Chemical Formula 1, thereby forming the trivalent or tetravalent second repeating unit.

The second repeating unit may be represented by the following Chemical Formula 2: 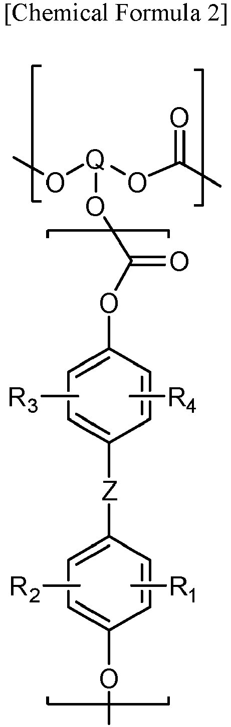 in Chemical Formula 2, R₁ to R₄ and Z are the same as defined in Chemical Formula 1,and Q is a trivalent or tetravalent phenol derivative compound derived from the branching agent.

For non-limiting example, when bisphenol A as the aromatic diol compound, triphosgene as the carbonate precursor, and 1,1,1,-tris(4'-hydroxyphenyl) ethane (THPE) as the branching agent are used to perform polymerization, the repeating unit of Chemical Formula 2 may be represented by the following Chemical Formula 2-1:

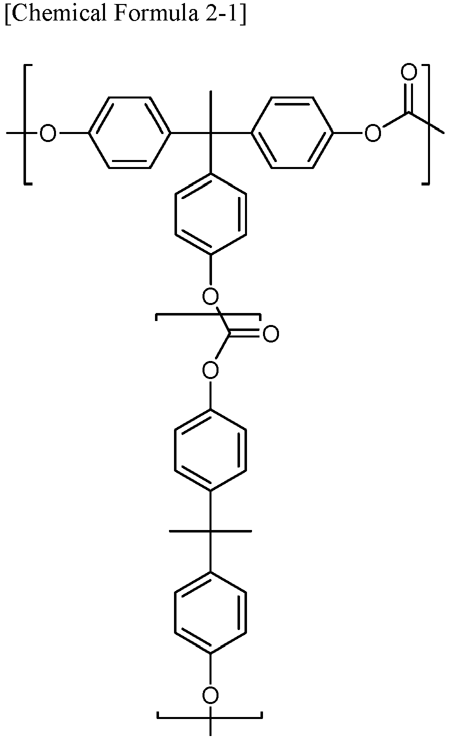

The branched polycarbonate resin may include 98 mol% to 99.999 mol% of the first repeating unit and 0.001 mol% to 2 mol% of the second repeating unit. Alternatively, the branched polycarbonate resin may include 98 mol% to 99.99 mol% of the first repeating unit and 0.01 mol% to 2 mol% of the second repeating unit. Alternatively, the branched polycarbonate resin may include 98 mol% to 99.9 mol% of the first repeating unit and 0.1 mol% to 2 mol% of the second repeating unit. If the content of the second repeating unit is excessively small, it is difficult to sufficiently achieve improvement in the extensional viscosity property due to the branched structure. On the contrary, if the content of the second repeating unit is excessively large, a large amount of gel may be formed to deteriorate physical property.

The branched polycarbonate resin may have a weight average molecular weight of 10,000 g/mol to 100,000 g/mol, preferably 20,000 g/mol to 50,000 g/mol. More preferably, the weight average molecular weight (Mw) may be 10,000 g/mol or more, 21,000 g/mol or more, 22,000 g/mol or more, 23,000 g/mol or more, 24,000 g/mol or more, 25,000 g/mol or more, 26,000 g/mol or more, 27,000 g/mol or more, or 28,000 g/mol or more. Further, the weight average molecular weight may be 100,000 g/mol or less, 50,000 g/mol or less, 45,000 g/mol or less, 42,000 g/mol or less, or 40,000 g/mol or less. In this regard, the weight average molecular weight refers to a converted value with respect to a standard polycarbonate (PC Standard), as measured by GPC (gel permeation chromatography).

Further, the branched polycarbonate resin has a melt index (MI) of 1 g/10 min to 50 g/10 min, or 1.5 g/10 min to 40 g/10 min according to ASTM D1238 (as measured at 300°C and a load of 1.2 kg for 10 minutes), which is preferred in terms of stable expression of physical properties of the resin composition.

Further, the branched polycarbonate resin may be included in an amount of 20% by weight to 50% by weight, or 30% by weight to 50% by weight, or 35% by weight to 45% by weight, based on the total weight of the linear polycarbonate resin and the branched polycarbonate resin.

If the content of the branched polycarbonate resin is too small, there is a problem in the effect of preventing dripping. On the contrary, if the content of the branched polycarbonate resin is too large, there is a problem in that processability may be reduced.

Meanwhile, the above-described branched polycarbonate resin may be directly prepared according to a known method of polymerizing a general aromatic polycarbonate resin using the aromatic diol compound represented by Chemical Formula 1-1, the carbonate precursor, and the branching agent as starting materials. As the polymerization method, for example, an interfacial polymerization method may be used. The interfacial polymerization may be explained with reference to the above description.

### (c) Fluorinated sulfonate-based metal salt

The flame retardant according to the present invention may be used as an alternative to Br- or Cl-based flame retardants having toxicity and environmental problems caused by generation of harmful gas, and may be used by adding to the polycarbonate for excellent flame retardancy.

Polycarbonate has relatively excellent mechanical properties, electrical properties, and weather resistance, as compared with other kinds of resins, but its flame retardancy is poor. Thus, to apply polycarbonate in various fields requiring flame retardancy, it is necessary to improve flame retardancy. Therefore, in the present invention, in addition to the above-described polycarbonate resin, the fluorinated sulfonate-based metal salt, and phenyl methyl silicone oil and a phenyl methyl silicone resin described below are further included to improve flame retardancy. Further, very excellent transparency may be obtained due to low haze.

Here, the 'fluorinated sulfonate-based metal salt' means a salt compound of a fluorinated sulfonic acid ion and a metal ion, which results in an increase in the char formation rate of the polycarbonate, thereby contributing to the improvement of the flame retardancy of the polycarbonate resin composition.

For example, the fluorinated sulfonate-based metal salt may be one or more compounds selected from the group consisting of sodium trifluoromethyl sulfonate, sodium perfluoroethyl sulfonate, sodium perfluorobutyl sulfonate, sodium perfluoroheptyl sulfonate, sodium perfluorooctyl sulfonate, potassium perfluorobutyl sulfonate, potassium perfluorohexyl sulfonate, potassium perfluorooctyl sulfonate, calcium perfluoromethane sulfonate, rubidium perfluorobutyl sulfonate, rubidium perfluorohexyl sulfonate, cesium trifluoromethyl sulfonate, cesium perfluoroethyl sulfonate, cesium perfluorohexyl sulfonate, and cesium perfluorooctyl sulfonate.

Preferably, the fluorinated sulfonate-based metal salt may be potassium perfluorobutyl sulfonate.

Further, the fluorinated sulfonate-based metal salt may be included in an amount of 0.04 parts by weight or more, or 0.08 parts by weight or more and 0.15 parts by weight or less, or 0.12 parts by weight or less, based on the total 100 parts by weight of the linear polycarbonate resin and the branched polycarbonate resin.

If the content of the fluorinated sulfonate-based metal salt is too small, there is a problem in that flame retardancy may be reduced. On the contrary, if the content of the fluorinated sulfonate-based metal salt is too large, there is a problem in that transparency may be reduced. In this respect, therefore, the fluorinated sulfonate-based metal salt is preferably included within the above range.

Meanwhile, the fluorinated sulfonate-based metal salt has excellent flame retardancy, but has a disadvantage of generating bubbles during injection molding of a composition including the same. For this reason, there has been an attempt to use sodium dodecylbenzene sulfonate as an organic sulfonate-based flame retardant replacing the fluorinated sulfonate-based metal salt. However, sodium dodecylbenzene sulfonate has a disadvantage of greatly reducing transparency or mechanical strength of the polycarbonate resin.

Accordingly, the polycarbonate resin composition of the present invention may include no sodium dodecylbenzenesulfonate while including phenyl methyl silicone oil and the phenyl methyl silicone resin described below, in addition to the fluorinated sulfonate-based metal salt, thereby maintaining flame retardancy and preventing bubble generation by the fluorinated sulfonate-based metal salt, and achieving excellent flame retardancy and processability at the same time.

### (d) Phenyl methyl silicone oil

Meanwhile, the polycarbonate resin composition according to the present invention may further include phenyl methyl silicone oil having a kinematic viscosity of 5 mm²/sec to 60 mm²/sec at 25°C, in order to improve flame retardancy.

Here, the 'phenyl methyl silicone oil' means a silicone polymer including a methyl group and a phenyl group as a side chain or terminal substituent of a siloxane repeating unit, and preferably, a silicone polymer including a methyl group as a terminal substituent and a phenyl group as a side chain substituent. Such a phenyl methyl silicone oil may contribute to improvement of heat resistance and flame retardancy of the polycarbonate resin composition by the repeating siloxane main chain, and may exhibit the effect of improving flame retardancy by essentially including the phenyl group.

The phenyl methyl silicone oil may have the kinematic viscosity of 5 mm²/sec to 60 mm²/sec at 25°C. Specifically, the phenyl methyl silicone oil may have the kinematic viscosity (mm²/sec) of 6 or more, 7 or more, 8 or more, 9 or more, or 10 or more at 25°C. Further, its kinematic viscosity (mm²/sec) may be 50 or less, 40 or less, 30 or less, 25 or less, or 20 or less at 25°C. If the kinematic viscosity of the phenyl methyl silicone oil is less than 5 mm²/sec, high volatility may generate bubbles. On the contrary, if the kinematic viscosity of the phenyl methyl silicone oil is more than 60 mm²/sec, transparency may be reduced. In this respect, therefore, phenyl methyl silicone satisfying the above-described range of kinematic viscosity is preferably used.

Preferably, the phenyl methyl silicone oil may be a silicone polymer including a phenyl trimethicone repeating unit. Specifically, the phenyl methyl silicone oil may be represented by the following Chemical Formula 3: 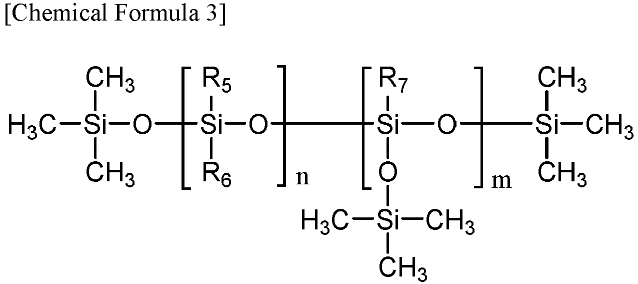 in Chemical Formula 3,
R₅ and R₆ are each independently C₁₋₁₀ alkyl, C₁₋₁₀ alkenyl, or C₆₋₁₀ aryl,
R₇ is phenyl,
n is an integer of 0 to 10, and
m is an integer of 1 to 10.

More preferably, in Chemical Formula 3, at least one of R₅ and R₆ may be a phenyl group.

For example, the phenyl methyl silicone oil may be a compound represented by the following Chemical Formula 3-1, wherein all of R₅ to R₇ in Chemical Formula 3 are phenyl groups: 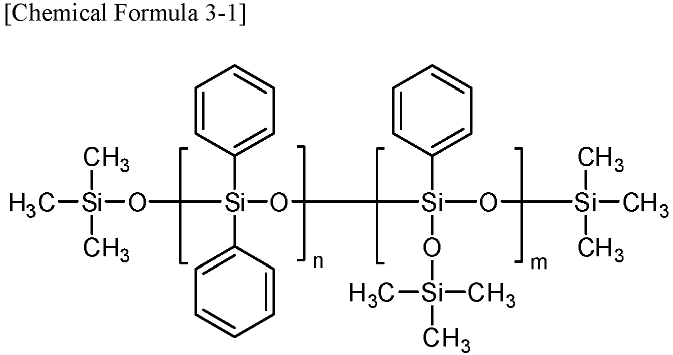 in Chemical Formula 3-1, n and m are the same as defined in Chemical Formula 3.

Further, the phenyl methyl silicone oil may be included in an amount of 1.5 parts by weight or more, or 1.8 parts by weight or more and 5.0 parts by weight or less, or 4.5 parts by weight or less, based on the total 100 parts by weight of the linear polycarbonate resin and the branched polycarbonate resin.

If the content of the phenyl methyl silicone oil is too small, there is a problem in that flame retardancy may be reduced. On the contrary, if the content of the phenyl methyl silicone oil is too large, there is a problem in that transparency may be reduced. In this respect, therefore, the phenyl methyl silicone oil is preferably included within the above range.

### (e) Phenyl methyl silicone resin

Meanwhile, the polycarbonate resin composition according to the present invention may further include a phenyl methyl silicone resin in order to prevent dripping and to improve flame retardancy.

Here, the 'phenyl methyl silicone resin' is a network structured polyorganosiloxane resin including both phenyl and methyl substituents and having solid-phase properties. The phenyl methyl silicone resin is distinguished from the aforementioned (d) phenyl methyl silicone oil in that it is in a solid phase.

As the phenyl methyl silicone resin, KR-480 available from Shinetsu Co., Ltd., etc. may be used.

As the phenyl methyl silicone resin having such a structure is used, the anti-dripping effect may be obtained.

The silicone resin may be included in an amount of 0.05 parts by weight or more, or 0.08 parts by weight or more and 0.2 parts by weight or less, or 0.1 part by weight or less, based on the total 100 parts by weight of the linear polycarbonate resin and the branched polycarbonate resin.

If the content of the phenyl methyl silicone resin is too small, there is a problem in that the anti-dripping effect may be reduced. On the contrary, if the content of the phenyl methyl silicone resin is too large, there is a problem in that transparency may be reduced. In this respect, therefore, the phenyl methyl silicone resin is preferably included within the above range.

### (f) Epoxy-based hydrolysis-resistant agent

Meanwhile, the polycarbonate resin composition according to the present invention may further include an epoxy-based hydrolysis-resistant agent in order to improve hydrolysis resistance.

As the epoxy-based hydrolysis-resistant agent, a compound having a structure, in which an epoxy group is fused into an aliphatic ring, may be used, and example of the hydrolysis-resistant agent having the epoxy-fused aliphatic ring may include 2021P(3,4-Epoxycyclohexylmethyl 3,4-epoxycyclohexanecarboxylate) available from Daicel, Corp.

Further, the epoxy-based hydrolysis-resistant agent may be included in an amount of 0.05 parts by weight or more, or 0.06 parts by weight or more, or 0.08 parts by weight or more and 0.2 parts by weight or less, or 0.15 parts by weight or less, or 0.12 parts by weight or less, based on the total 100 parts by weight of the linear polycarbonate resin and the branched polycarbonate resin.

When the content of the epoxy-based hydrolysis-resistant agent is within the above range, the effect of hydrolysis resistance may be sufficiently achieved without reduction in transparency and flame retardancy of the resin composition. In this respect, therefore, the epoxy-based hydrolysis-resistant agent is preferably included within the above range.

### (g) UV absorber

Meanwhile, the polycarbonate resin composition according to the present invention may further include a UV absorber in order to effectively block UV coming from the outside.

The UV absorber applicable in the present invention may be any UV absorber without particular limitation, as long as it allows a molded film specimen of the polycarbonate resin composition according to the present invention to have light transmittance of 20% or less, preferably 10% or less at a wavelength of 380 nm under a thickness condition of 3 mm.

Preferably, the UV absorber may be one or more selected from the group consisting of a benzotriazole compound, a benzophenone compound, an oxanilide compound, a benzoic acid ester compound, and a triazine compound.

For example, the UV absorber may include benzotriazole compounds such as 2-(2'-hydroxyphenyl)-benzotriazole compounds including 2-(2'-hydroxy-5' -methylphenyl)benzotriazole, 2-(2' -hydroxy-5' -tert-octylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2-hydroxy-5-(1,1,3,3,tetramethylbutyl)phenyl)benzotriazole, 2-(3',5'-di-tert-butyl-2'-hydroxyphenyl)-5-benzotriazole, 2-(3'-tert-butyl-2'-hydroxyphenyl-5'-methylphenyl)-5-benzotriazole, 2-(3'-sec-butyl-5'-tert-butyl-2'-hydroxyphenyl)benzotriazole, 2-(2'-hydroxy-4'-octyloxyphenylphenyl)-5-benzotriazole or 2-(3',5'-di-tert-butyl-2'-hydroxyphenyl)benzotriazole, etc.; benzophenone compounds such as 2-hydroxy benzophenone compounds having a 4-hydroxy, 4-methoxy, 4-octyloxy, 4-decyloxy, 4-dodecyloxy, 4-benzyloxy, 4,2',4'-trihydroxy, or 2'-hydroxy-4,4'-dimethoxy functional group; benzoic acid ester compounds such as compounds having a substituted benzoic acid ester structure, including 4-tert-butyl-phenyl salicylate, phenyl salicylate, octylphenyl salicylate, dibenzoyl resorcinol, bis(4-tert-butyl-benzoyl)resorcinol, benzoyl resorcinol, 2,4-di-tert-butylphenyl-3,5'-di-tert-butyl-4-hydroxybenzoate, hexadecyl 3,5-di-tert-butyl-4-4hydroxybenzoate, octadecyl 3,5-di-tert-butyl-4-hydroxybenzoate or 2-methyl-4,6-di-tert-butylphenyl 3,5-di-tert-butyl-4-hydroxybenzoate, etc.; or triazine compounds having a 2,4,6-triphenyl-1,3,5-triazine skeleton, etc., but is not limited thereto.

Further, the UV absorber may be included in an amount of 0.1 part by weight or more, or 0.2 parts by weight or more and 0.5 parts by weight or less, or 0.4 parts by weight or less, based on the total 100 parts by weight of the linear polycarbonate resin and the branched polycarbonate resin.

When the content of the UV absorber is within the above range, the effect of weather resistance may be sufficiently achieved without reduction in transparency and flame retardancy of the resin composition. In this respect, therefore, the UV absorber is preferably included within the above range.

### (h) Additives

In addition to the above-described components, the polycarbonate resin composition according to the present invention may further include, if necessary, additives such as an impact reinforcing agent; a rheology modifier; a flame retardant such as a phosphorus flame retardant, etc.; a surfactant; a nucleating agent; a coupling agent; a filler; a plasticizer; a lubricant; an antibacterial agent; a mold release agent; a heat stabilizer; an antioxidant; a UV stabilizer; a compatibilizer; a coloring agent; an antistatic agent; a pigment; a dye; a flame proofing agent, etc.

The content of the additives may vary depending on the physical properties to be provided for the composition. For example, the additives may be included in an amount of 0.01 part by weight to 10 parts by weight, based on the total 100 parts by weight of the linear polycarbonate resin and the branched polycarbonate resin.

However, to prevent reduction in heat resistance, impact strength, and chemical resistance of the polycarbonate resin composition, which is caused by adding the additives, the total content of the additives may be preferably 20 parts by weight or less, or 15 parts by weight or less, or 10 parts by weight or less, based on the total 100 parts by weight of the linear polycarbonate resin and the branched polycarbonate resin.

The polycarbonate resin composition of one embodiment of the present invention may exhibit excellent flame retardancy of V-0 grade, as measured for a specimen having a thickness of 1.5 mm in accordance with UL 94 standard.

Further, the polycarbonate resin composition of one embodiment of the present invention may exhibit the flame retardancy of V-0 grade before and after a water exposure test (immersion protocol) and a UV exposure test (weather-O-meter protocol), as measured for a film specimen having a thickness of 1.5 mm in accordance with UL 746C, indicating excellent weather resistance.

Further, the polycarbonate resin composition of one embodiment of the present invention may exhibit tensile impact of 310 kJ/m² or more, or 315 kJ/m² or more, or 320 kJ/m² or more, and 360 kJ/m² or less, or 350 kJ/m² or less, or 340 kJ/m² or less, as measured in accordance with ASTM D1822(1/4inch), indicating excellent impact strength.

Further, the polycarbonate resin composition of one embodiment of the present invention may exhibit tensile strength of 60 MPa or more, or 62 MPa or more, or 64 MPa or more, and 80 MPa or less, or 75 MPa or less, or 70 MPa or less, as measured for a specimen having a thickness of 1.5 mm in accordance with ASTM D638(1.5 mm), indicating excellent tensile strength.

Further, when the tensile impact of the polycarbonate resin composition of one embodiment of the present invention is measured for a film specimen having a thickness of 1.5 mm in accordance with a water exposure test (immersion protocol) of UL 746C, the tensile impact value after the exposure test may be 50% or more of the value measured before the exposure test.

Simultaneously, when the tensile impact and tensile strength of the polycarbonate resin composition of one embodiment of the present invention are measured for the film specimen having a thickness of 1.5 mm in accordance with a UV exposure test (weather-O-meter protocol) of UL 746C, each value after the exposure test may be 70% or more of the value measured before the exposure test.

Further, the polycarbonate resin composition of one embodiment of the present invention may exhibit room-temperature impact strength of 790 J/m or more, or 800 J/m or more, or 810 J/m or more and 900 J/m or less, or 880 J/m or less, or 860 J/m or less, as measured at 23°C in accordance with ASTM D256(1/8 inch, Notched Izod), indicating excellent room-temperature impact strength.

Further, the polycarbonate resin composition of one embodiment of the present invention may exhibit haze of 0.01% or more, and 2.4% or less, or 2.0% or less, or 1.0% or less, or 0.8% or less, or 0.6% or less, or 0.5% or less, as measured for an injection-molded specimen having a thickness of 3 mm in accordance with ASTM D1003, indicating excellent weather resistance.

Further, the polycarbonate resin composition of one embodiment of the present invention may exhibit a spiral length of 50 cm or more, or 51 cm or more, or 53 cm or more and 65 cm or less, or 60 cm or less, or 58 cm or less, as measured by injection-molding at 330°C using a spiral mold having a thickness of 2.5 mm and a width of 10 mm, indicating excellent processability.

Further, the polycarbonate resin composition of one embodiment of the present invention may exhibit a melt index (MI) of 7 g/10 min or more, or 8 g/10 min or more and 50 g/10 min or less, or 30 g/10 min or less, or 20 g/10 min or less, as measured in accordance with ASTM D1238 (at 300°C under a load of 1.2 kg for 10 minutes), indicating excellent fluidity.

Further, the polycarbonate resin composition of one embodiment of the present invention may exhibit the number of drips of 0, as measured under UL94 vertical test conditions, indicating excellent dripping flame retardancy.

Further, the polycarbonate resin composition of one embodiment of the present invention may exhibit a total combustion time (sec) of 27 sec or more, or 28 sec or more, 29 sec or more, 30 sec or more, 31 sec or more, or 32 sec or more and 50 sec or less, or 45 sec or less, or 40 sec or less, as measured under UL94 vertical test conditions, indicating excellent flame retardancy.

### Resin molded article

According to another embodiment of the present invention, provided is a molded article including the above-described polycarbonate resin composition.

The molded article is an article obtained by performing molding such as extrusion, injection, or casting using the above-described polycarbonate resin composition as a raw material. The molding method and conditions may be appropriately selected and controlled according to the kind of the molded article.

For non-limiting example, the molded article may be obtained by a method of mixing and extrusion-molding the polycarbonate resin composition to prepare a pellet, and drying the pellet, followed by injection.

In particular, as the molded article is produced from the polycarbonate resin composition, it may exhibit excellent processability, flame retardancy, and transparency, thereby being appropriately used as a material for electrical and electronic parts, parts for lighting equipment, etc.

Hereinafter, preferred examples will be provided for better understanding of the present invention. However, the following examples are provided only for illustrating the present invention, but the present invention is not limited thereby.

### <Example>

### Used materials

The following materials were used in Examples and Comparative Examples.

### (a) Linear copolycarbonate resin

(a-1) LUPOY PC1080-70 (weight average molecular weight: 19,600 g/mol) produced by LG Chem Ltd., which is a polycarbonate including a repeating unit of Chemical Formula 1-2.
(a-2) LUPOY PC1300-30 (weight average molecular weight: 21,100 g/mol) produced by LG Chem Ltd., which is a polycarbonate including the repeating unit of Chemical Formula 1-2.
(a-3) LUPOY PC1300-15 (weight average molecular weight: 27,800 g/mol) produced by LG Chem Ltd., which is a polycarbonate including the repeating unit of Chemical Formula 1-2.

### (b) Branched polycarbonate resin

(b-1) LUPOY PC1600-03 produced by LG Chem Ltd., which is a polycarbonate having a weight average molecular weight of 37,600 g/mol and including repeating units of Chemical Formulae 1-2 and 2-1.

### (c) Organic sulfonate-based metal salt

(c-1) FR-2025 produced by 3M, Com., which is a potassium perfluorobutyl sulfonate (KPFBS).
(c-2) KSS-FR produced by Arichem, LLC., which is a potassium diphenylsulfone sulfonate (KSS).
(c-3) SDBS (sodium dodecylbenzene sulfonate) produced by TCI Chemical, Co., Ltd.

### (d) Phenyl methyl silicone oil

(d-1) KR-56A produced by ShinEstu, Chemical Co., Ltd., Japan, which is a phenyl methyl silicone oil represented by the following Chemical Formula 3-1 having a kinematic viscosity of 15 mm²/sec at 25°C: 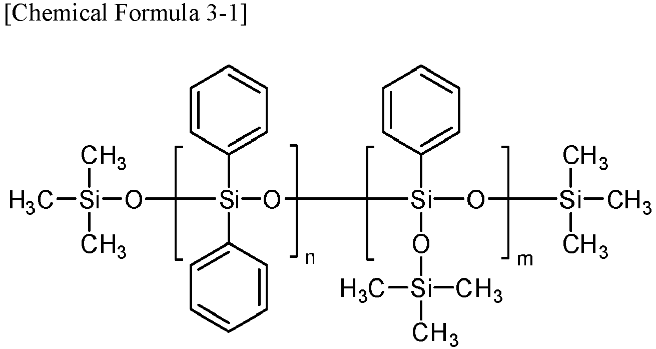
(d-2) KR-2710 produced by ShinEstu, Chemical Co., Ltd., Japan, which is a phenyl methyl silicone oil having a kinematic viscosity of 50 mm²/sec at 25°C.
(d-3) KR-511 produced by ShinEstu, Chemical Co., Ltd., Japan, which is a phenyl methyl silicone oil having a kinematic viscosity of 100 mm²/sec at 25°C.
(d-4) DC-550 produced by Dow Corning, Corp., which is a linear phenyl methyl silicone oil having a kinematic viscosity of 125 mm²/sec at 25°C.

### (e) Phenyl methyl silicone resin

(e-1) KR-480 produced by ShinEstu, Chemical Co., Ltd., Japan, which is a phenyl methyl silicone resin.

### (f) Epoxy-based hydrolysis-resistant agent

(f-1) Celloxide 2021P produced by Daicel Corporation, which is (3',4'-epoxycyclohexane)methyl 3,4-epoxycyclohexylcarboxylate.

### (g) UV absorber

(g-1) TINUVIN produced by 329 BASF, AG.

### (h) Additives

(h-1) Alkanox 240 produced by Addivant, Corp., which is tris(2,4-di-tert-butylphenyl) phosphite.
(h-2) FACI L348 produced by FACI, which is pentaerythrityl tetraethylhexanoate (PETS).

### Examples and Comparative Examples

The respective components described in the following Tables 1 to 4 were mixed, and then pelletized at a speed of 80 kg per time using a biaxial extruder (L/D=36, Φ=45, barrel temperature: 240°C), and injection-molded using an injection molding machine N-20C of JSW (Ltd.) at a cylinder temperature of 300°C and a mold temperature of 80°C to produce each specimen.

Components and contents used in Examples and Comparative Examples are shown in Tables 1 to 4 below, respectively.

**[Table 1]**

| | | Example 1-1 | Example 1-2 | Example 1-3 | Example 1-4 | Example 1-5 |
|---|---|---|---|---|---|---|
| Linear PC¹⁾ (wt%) | a | a-1(15) | a-1(15) | a-1(15) | a-1(15) | a-3(80) |
| | | a-2(45) | a-2(45) | a-2(45) | a-2(45) | |
| Branched PC¹⁾ (wt%) | b | b-1(40) | b-1(40) | b-1(40) | b-1(40) | b-1(20) |
| Organic sulfonate metal salt (phr)²⁾ | c | c-1(0.10) | c-1(0.10) | c-1(0.10) | c-1(0.10) | c-1(0.10) |
| Phenyl methyl silicone oil (phr)²⁾ | d | d-1(2.00) | d-1(3.00) | d-1(4.00) | d-2(3.00) | d-1(4.00) |
| Phenyl methyl silicone resin (phr)²⁾ | e | e-1(0.10) | e-1(0.10) | e-1(0.10) | e-1(0.10) | e-1(0.10) |
| Additive (phr)²⁾ | h | h-1(0.05) | h-1(0.05) | h-1(0.05) | h-1(0.05) | h-1(0.05) |
| | | h-2(0.05) | h-2(0.05) | h-2(0.05) | h-2(0.05) | h-2(0.05) |

| | | | | | | |
|---|---|---|---|---|---|---|
| 1) % by weight with respect to total weight of linear polycarbonate resin and branched carbonate resin 2) parts by weight with respect to total 100 parts by weight of linear polycarbonate resin and branched carbonate resin | | | | | | |

**[Table 2]**

| | | Comparative Example 1-1 | Comparative Example 1-2 | Comparative Example 1-3 | Comparative Example 1-4 | Comparative Example 1-5 | Comparative Example 1-6 | Comparative Example 1-7 | Comparative Example 1-8 | Comparative Example 1-9 |
|---|---|---|---|---|---|---|---|---|---|---|
| Linear PC¹⁾ (wt%) | a | a-3 (100) | a-3 (100) | a-1(15) | a-1(15) | a-1(15) | a-1(15) | a-1(15) | a-1(15) | a-1(15) |
| | | | | a-2(45) | a-2(45) | a-2(45) | a-2(45) | a-2(45) | a-2(45) | a-2(45) |
| Branched PC¹⁾ (wt%) | b | - | - | b-1(40) | b-1(40) | b-1(40) | b-1(40) | b-1(40) | b-1(40) | b-1(40) |
| Organic sulfonate metal salt (phr)²⁾ | c | c-1(0.10) | c-1 (0.10) | c-1 (0.10) | c-1 (0.10) | c-2 (0.30) | c-1 (0.10) | c-1 (0.10) | c-1 (0.10) | c-3 (0.10) |
| Phenyl methyl silicone oil (phr)²⁾ | d | - | d-1 (2.00) | d-3 (2.00) | d-4 (2.00) | d-1 (3.00) | d-1 (1.00) | d-1 (2.00) | d-1 (2.00) | d-1 (3.00) |
| Phenyl methyl silicone resin (phr)²⁾ | e | - | e-1 (0.10) | e-1 (0.10) | e-1 (0.10) | e-1 (0.10) | e-1 (0.10) | - | e-1 (0.30) | e-1 (0.10) |
| Additive (phr)²⁾ | h | h-1 (0.05) | h-1 (0.05) | h-1 (0.05) | h-1 (0.05) | h-1 (0.05) | h-1 (0.05) | h-1 (0.05) | h-1 (0.05) | h-1 (0.05) |
| | | h-2 (0.05) | h-2 (0.05) | h-2 (0.05) | h-2 (0.05) | h-2 (0.05) | h-2 (0.05) | h-2 (0.05) | h-2 (0.05) | h-2 (0.05) |

| | | | | | | | | | | |
|---|---|---|---|---|---|---|---|---|---|---|
| 1) % by weight with respect to total weight of linear polycarbonate resin and branched carbonate resin 2) parts by weight with respect to total 100 parts by weight of linear polycarbonate resin and branched carbonate resin | | | | | | | | | | |

**[Table 3]**

| | | Example 2-1 | Example 2-2 | Example 2-3 | Example 2-4 | Example 2-5 | Example 2-6 | Example 2-7 |
|---|---|---|---|---|---|---|---|---|
| Linear PC¹⁾ (wt%) | a | a-1(15) | a-1(15) | a-1(15) | a-1(15) | a-1(15) | a-1(15) | a-1(15) |
| | | a-2(45) | a-2(45) | a-2(45) | a-2(45) | a-2(45) | a-2(45) | a-2(45) |
| Branched PC¹⁾ (wt%) | b | b-1(40) | b-1(40) | b-1(40) | b-1(40) | b-1(40) | b-1(40) | b-1(40) |
| Organic sulfonate metal salt (phr)²⁾ | c | c-1(0.10) | c-1(0.15) | c-1(0.10) | c-1(0.10) | c-1(0.10) | c-1(0.10) | c-1(0.10) |
| Phenyl methyl silicone oil (phr)²⁾ | d | d-1(2.00) | d-1(2.00) | d-1(3.00) | d-1(4.00) | d-1(2.00) | d-1(2.00) | d-1(2.00) |
| Phenyl methyl silicone resin (phr)²⁾ | e | e-1(0.10) | e-1(0.10) | e-1(0.10) | e-1(0.10) | e-1(0.20) | e-1(0.10) | e-1(0.10) |
| Epoxy-based hydrolysis-resistant agent (phr)²⁾ | f | f-1(0.10) | f-1(0.10) | f-1(0.10) | f-1(0.10) | f-1(0.10) | f-1(0.20) | f-1(0.10) |
| UV absorber (phr)²⁾ | g | g-1(0.25) | g-1(0.25) | g-1(0.25) | g-1(0.25) | g-1(0.25) | g-1(0.25) | g-1(0.50) |
| Additive (phr)²⁾ | h | h-1(0.05) | h-1(0.05) | h-1(0.05) | h-1(0.05) | h-1(0.05) | h-1(0.05) | h-1(0.05) |
| | | h-2(0.05) | h-2(0.05) | h-2(0.05) | h-2(0.05) | h-2(0.05) | h-2(0.05) | h-2(0.05) |

| | | | | | | | | |
|---|---|---|---|---|---|---|---|---|
| 1) % by weight with respect to total weight of linear polycarbonate resin and branched carbonate resin 2) parts by weight with respect to total 100 parts by weight of linear polycarbonate resin and branched carbonate resin | | | | | | | | |

**[Table 4]**

| | | Comparative Example 2-1 | Comparative Example 2-2 | Comparative Example 2-3 | Comparative Example 2-4 | Comparative Example 2-5 | Comparative Example 2-6 | Comparative Example 2-7 |
|---|---|---|---|---|---|---|---|---|
| Linear PC¹⁾ (wt%) | a | a-3 (100) | a-1(15) | a-1(15) | a-1(15) | a-1(15) | a-1(15) | a-1(15) |
| | | | a-2(45) | a-2(45) | a-2(45) | a-2(45) | a-2(45) | a-2(45) |
| Branched PC¹⁾ (wt%) | b | - | b-1(40) | b-1(40) | b-1(40) | b-1(40) | b-1(40) | b-1(40) |
| Organic sulfonate metal salt (phr)²⁾ | c | c-1(0.10) | - | c-1(0.10) | c-1(0.10) | c-1(0.10) | c-1(0.10) | c-3(0.10) |
| Phenyl methyl silicone oil (phr)²⁾ | d | d-1(2.00) | d-1(2.00) | - | d-3(2.00) | d-1(2.00) | d-1(2.00) | d-1(2.00) |
| Phenyl methyl silicone resin (phr)²⁾ | e | e-1(0.10) | e-1(0.10) | e-1(0.10) | e-1(0.10) | | e-1(0.10) | e-1(0.10) |
| Epoxy-based hydrolysis-resistant agent (phr)²⁾ | f | f-1(0.10) | f-1(0.10) | f-1(0.10) | f-1(0.10) | f-1(0.20) | - | f-1(0.10) |
| UV absorber (phr)²⁾ | g | g-1(0.25) | g-1(0.25) | g-1(0.25) | g-1(0.25) | g-1(0.25) | g-1(0.25) | g-1(0.25) |
| Additive (phr)²⁾ | h | h-1(0.05) | h-1(0.05) | h-1(0.05) | h-1(0.05) | h-1(0.05) | h-1(0.05) | h-1(0.05) |
| | | h-2(0.05) | h-2(0.05) | h-2(0.05) | h-2(0.05) | h-2(0.05) | h-2(0.05) | h-2(0.05) |

| | | | | | | | | |
|---|---|---|---|---|---|---|---|---|
| 1) % by weight with respect to total weight of linear polycarbonate resin and branched carbonate resin 2) parts by weight with respect to total 100 parts by weight of linear polycarbonate resin and branched carbonate resin | | | | | | | | |

### Experimental Example

The compositions of Examples and Comparative Examples and specimens produced therefrom were measured for physical properties by the following methods, respectively.
1) Melt Index (MI): measured in accordance with ASTM D1238 (under conditions of 300°C and 1.2 kg).
2) Room temperature impact strength: measured in accordance with ASTM D256 (1/8inch, Notched Izod) at 23°C.
3) Haze: measured for a specimen having a thickness of 3 mm in accordance with ASTM D1003 using a haze meter.
4) Spiral length: measured as an average length of a total of 10 injection molded-articles after injection molding at 330°C using a spiral mold having a thickness of 2.5 mm and a width of 10 mm.
5) Number of drips: the number of drips (in the case of dripping spark particles) was measured in accordance with UL 94 vertical test protocol.
6) Total combustion time: measured as the sum of tl, t2, and t3 in accordance with UL94 vertical test criteria of the following Table 5.
7) Flame retardancy (UL 94 Protocol): flame retardancy was tested in accordance with UL 94 standard. In detail, five flame retardant specimens having a thickness of 1.5 mm required for the flame retardancy test were prepared, and tested as follows.
First, each specimen was left in contact with 20 mm high flame for 10 seconds, and then a combustion time (t1) of the specimen was measured, and a combustion aspect was recorded. Then, after the primary flame-contact, the combustion was terminated, and each specimen was left in contact with flame for another 10 seconds. Next, a combustion time (t2) and a glowing time (t3) of the specimen were measured, and a combustion aspect was recorded. The test was equally applied to five specimens, and the specimens were evaluated according to the criteria of Table 5 below.

**[Table 5]**

| Flame retardancy rating | V-0 | V-1 | V-2 |
|---|---|---|---|
| Each combustion time (t1 or t2 of each specimen) | 10 sec or less | 30 sec or less | 30 sec or less |
| Total combustion time of five specimens (sum of t1 and t2 of five specimens) | 50 sec or less | 250 sec or less | 250 sec or less |
| Combustion time and Glowing time after secondary flame contact (sum of t2 and t3 of each specimen) | 30 sec or less | 60 sec or less | 60 sec or less |
| Whether particle causing flame | None | None | Dropped |

9) Weather resistance 1 (UL 746C immersion protocol): weather resistance was evaluated by a water exposure test in accordance with UL 746C standard. In detail, five specimens having a thickness of 1.5 mm required for the test were prepared, and each specimen was measured for flame retardancy rating, tensile impact and tensile strength values. Next, each specimen was pre-immersed in distilled water at 70°C for 7 days, and then immersed in distilled water at 23°C for 30 minutes, and then the tensile impact value was measured. Each specimen was pre-immersed in distilled water at 70°C for 7 days, and then immersed at 23°C and relative humidity of 50% for 2 weeks, and then the flame retardancy was rated and compared with the value before exposure.
10) Weather resistance 2 (UL 746C Weather-O-meter protocol): weather resistance was evaluated by a UV exposure test in accordance with UL 746C standard. In detail, five specimens having a thickness of 1.5 mm required for the test were prepared, and each specimen was measured for flame retardancy rating, tensile impact and tensile strength values. Next, a xenon-arc lamp was prepared according to ASTM G151, and each specimen was irradiated with UV for 102 minutes, and then exposed to UV and water spray for the remaining 18 minutes. This cycle of the total 120 minutes was repeatedly carried out until the total time reached 1000 hours. Each specimen was measured for flame retardancy rating, tensile impact and tensile strength values, and compared with the values before exposure. At this time, the test was carried out by irradiation at a wavelength of 340 nm with energy of 0.35 W/m² under operation conditions of a black-panel temperature of 63°C (error: 3°C).

In the weather resistance tests 1 and 2, tensile impact was measured in accordance with ASTM D1822 (1/4 inch), and tensile strength was measured in accordance with ASTM D638 (1.5 mm).

The results of measuring the physical properties are shown in Tables 6 to 9 below, respectively.

**[Table 6]**

| Section | Example 1-1 | Example 1-2 | Example 1-3 | Example 1-4 | Example 1-5 |
|---|---|---|---|---|---|
| Melt index (g/10min) | 15.6 | 16.4 | 17.6 | 16.2 | 16.2 |
| Room temperature impact strength (J/m) | 812 | 821 | 825 | 798 | 842 |
| Haze (%) | 0.38 | 0.42 | 0.51 | 0.43 | 0.52 |
| Spiral length (cm) | 53.6 | 55.2 | 57.3 | 54.1 | 50.8 |
| Number of drips (number) | 0 | 0 | 0 | 0 | 0 |
| Total combustion time (second) | 32.7 | 33.8 | 36.1 | 33.1 | 35.1 |
| UL94 rating | V-0 | V-0 | V-0 | V-0 | V-0 |

**[Table 7]**

| Section | Comparative Example 1-1 | Comparative Example 1-2 | Comparative Example 1-3 | Comparative Example 1-4 | Comparative Example 1-5 | Comparative Example 1-6 | Comparative Example 1-7 | Comparative Example 1-8 | Comparative Example 1-9 |
|---|---|---|---|---|---|---|---|---|---|
| Melt index (g/10min) | 15.1 | 17.3 | 15.3 | 15.1 | 17.2 | 14.3 | 15.8 | 14.8 | 18.6 |
| Room temperature impact strength (J/m) | 845 | 815 | 866 | 825 | 788 | 822 | 792 | 833 | 615 |
| Haze (%) | 0.23 | 0.33 | 2.18 | 45.1 | 2.83 | 0.33 | 0.32 | 1.82 | 7.81 |
| Spiral length (cm) | 46.9 | 48.1 | 52.1 | 51.8 | 53.8 | 51.8 | 53.2 | 82.4 | 63.5 |
| Number of drips (number) | 5 | 5 | 4 | 2 | 4 | 3 | 2 | 0 | 5 |
| Total combustion time (second) | 78.2 | 36.1 | 42.1 | 32.1 | 39.3 | 38.2 | 37.3 | 33.3 | 87.3 |
| UL94 rating | V-2 | V-2 | V-2 | V-2 | V-2 | V-2 | V-2 | V-0 | V-2 |

**[Table 8]**

| | Section | Example 2-1 | Example 2-2 | Example 2-3 | Example 2-4 | Example 2-5 | Example 2-6 | Example 2-7 |
|---|---|---|---|---|---|---|---|---|
| Initial physical properties | Melt index (g/10min) | 14.8 | 15.0 | 16.0 | 17.1 | 14.7 | 15.4 | 14.7 |
| | Spiral length (cm) | 52.0 | 51.8 | 54.8 | 57.0 | 52.4 | 53.7 | 51.6 |
| | Haze (%) | 0.48 | 1.02 | 0.53 | 0.60 | 2.31 | 0.51 | 0.43 |
| | Tensile impact (kJ/m²) | 324 | 315 | 330 | 332 | 319 | 319 | 326 |
| | Tensile strength (MPa) | 69 | 64 | 67 | 68 | 65 | 67 | 66 |
| UL94 protocol | Number of drips (number) | 0 | 0 | 0 | 0 | 0 | 0 | 0 |
| | Total combustion time (second) | 27.9 | 38 | 29.2 | 32.2 | 30.1 | 37.5 | 39.5 |
| | UL94 rating | V-0 | V-0 | V-0 | V-0 | V-0 | V-0 | V-0 |
| UL 746C immersion protocol | Tensile impact (kJ/m²) | 292 | 300 | 326 | 329 | 319 | 300 | 310 |
| | Tensile strength (MPa) | 63 | 60 | 64 | 65 | 63 | 64 | 61 |
| | UL94 rating | V-0 | V-0 | V-0 | V-0 | V-0 | V-0 | V-0 |
| UL 746C Weather-O-meter protocol | Tensile impact (kJ/m²) | 253 | 236 | 244 | 252 | 236 | 230 | 267 |
| | Tensile strength (MPa) | 55 | 49 | 50 | 51 | 48 | 48 | 56 |
| | UL94 rating | V-0 | V-0 | V-0 | V-0 | V-0 | V-0 | V-0 |

**[Table 9]**

| | Section | Comparative Example 2-1 | Comparative Example 2-2 | Comparative Example 2-3 | Comparative Example 2-4 | Comparative Example 2-5 | Comparative Example 2-6 | Comparative Example 2-7 |
|---|---|---|---|---|---|---|---|---|
| Initial physical properties | Melt index (g/10min) | 15.2 | 14.0 | 13.2 | 14.7 | 15.1 | 14.3 | 16.8 |
| | Spiral length (cm) | 47.1 | 49.9 | 45.2 | 51.4 | 52.8 | 51.0 | 60.1 |
| | Haze (%) | 0.33 | 0.42 | 0.31 | 2.32 | 0.44 | 0.48 | 3.41 |
| | Tensile impact (kJ/m²) | 342 | 339 | 338 | 348 | 311 | 319 | 132 |
| | Tensile strength (MPa) | 70 | 67 | 66 | 65 | 63 | 64 | 42 |
| UL94 protocol | Number of drips (number) | 5 | 5 | 5 | 4 | 2 | 0 | 5 |
| | Total combustion time (second) | 57.3 | 60.7 | 49.5 | 47.7 | 35.7 | 30.8 | 79.6 |
| | UL94 rating | V-2 | V-2 | V-2 | V-2 | V-2 | V-0 | V-2 |
| UL 746C immersion protocol | Tensile impact (kJ/m²) | | | | | | 287 | |
| | Tensile strength (MPa) | | | | | | 57 | |
| | UL94 rating | | | | | | V-2 | |
| UL 746C Weather-O-meter protocol | Tensile impact (kJ/m²) | | | | | | 262 | |
| | Tensile strength (MPa) | | | | | | 52 | |
| | UL94 rating | | | | | | V-0 | |

(In Table 9, the weather resistance was not tested for Comparative Examples which were rated as V-2 during the initial UL94 test)

Referring to Tables 6 to 9, the flame retardant polycarbonate resin compositions of the present invention may exhibit all excellent properties in flame retardancy, melt index, impact strength, transparency, weather resistance, etc.

## Claims

1. A polycarbonate resin composition comprising:
(a) a linear polycarbonate resin including a first repeating unit represented by the following Chemical Formula 1;
(b) a branched polycarbonate resin including a first repeating unit represented by the following Chemical Formula 1;
based on 100 parts by weight of the linear polycarbonate resin and the branched polycarbonate resin,
(c) 0.04 parts by weight to 0.15 parts by weight of a fluorinated sulfonate-based metal salt;
(d) 1.5 parts by weight to 5.0 parts by weight of phenyl methyl silicone oil having a kinematic viscosity of 5 mm²/sec to 60 mm²/sec at 25°C; and
(e) 0.05 parts by weight to 0.2 parts by weight of a phenyl methyl silicone resin; 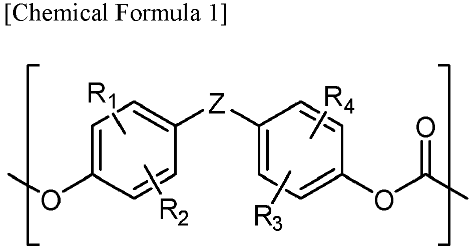 in Chemical Formula 1,
R₁ to R₄ are each independently hydrogen, C₁₋₁₀ alkyl, C₁₋₁₀ alkoxy, or halogen, and
Z is C₁₋₁₀ alkylene unsubstituted or substituted with phenyl, C₃₋₁₅ cycloalkylene unsubstituted or substituted with C₁₋₁₀ alkyl, O, S, SO, SO₂, or CO.

2. The polycarbonate resin composition of claim 1, wherein the first repeating unit represented by Chemical Formula 1 is derived from one or more aromatic diol compounds selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and a,ω-bis[3-(o-hydroxyphenyl)propyl]polydimethylsiloxane.

3. The polycarbonate resin composition of claim 1, wherein the first repeating unit represented by Chemical Formula 1 is represented by the following Chemical Formula 1-2:

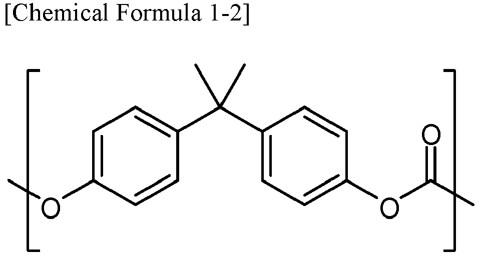

4. The polycarbonate resin composition of claim 1, wherein the branched polycarbonate resin includes the first repeating unit represented by Chemical Formula 1 and a trivalent or tetravalent second repeating unit connecting a plurality of the first repeating units to each other.

5. The polycarbonate resin composition of claim 4, wherein the second repeating unit is derived from one or more branching agents selected from the group consisting of 1,1,1-tris(4-hydroxyphenyl)ethane, 1,3,5-tris-(2-hydroxyethyl)cyanuric acid, 4,6-dimethyl-2,4,6-tris-(4-hydroxyphenyl)-heptane-2,2,2-bis[4,4'-(dihydroxyphenyl)cyclohexyl]propane, 1,3,5-trihydroxybenzene, 1,2,3-trihydroxybenzene, 1,4-bis-(4',4"-dihydroxytriphenyl methyl)-benzene, 2',3',4'-trihydroxyacetophenone, 2,3,4-trihydroxybenzoic acid, 2,3,4,-trihydroxybenzophenone, 2,4,4'-trihydroxybenzophenone, 2',4',6'-trihydroxy-3-(4-hydroxyphenyl)propiophenone, pentahydroxyflavone, 3,4,5-trihydroxyphenylethylamine, 3,4-trihydroxyphenylethylalcohol, 2,4,5-trihydroxypyrimidine, tetrahydroxy-1,4-quinone hydrate, 2,2',4,4'-tetrahydroxybenzophenone, and 1,2,5,8-tetrahydroxyanthraquinone.

6. The polycarbonate resin composition of claim 4, wherein the second repeating unit is represented by the following Chemical Formula 2-1:

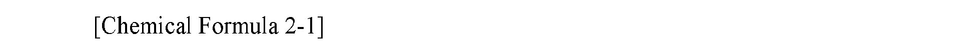

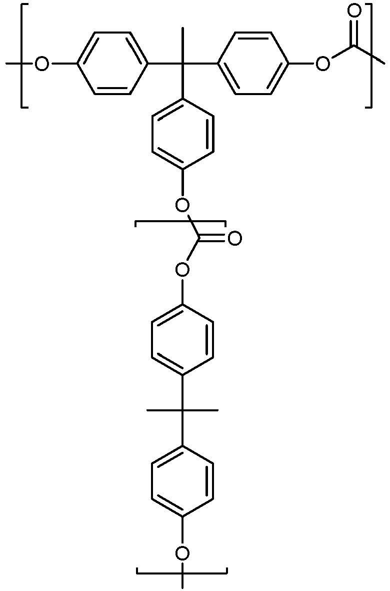

7. The polycarbonate resin composition of claim 1, wherein the linear polycarbonate resin is included in an amount of 50% by weight to 80% by weight and the branched polycarbonate resin is included in an amount of 20% by weight to 50% by weight, based on the total weight of the linear polycarbonate resin and the branched polycarbonate resin.

8. The polycarbonate resin composition of claim 1, wherein the fluorinated sulfonate-based metal salt is one or more selected from the group consisting of sodium trifluoromethyl sulfonate, sodium perfluoroethyl sulfonate, sodium perfluorobutyl sulfonate, sodium perfluoroheptyl sulfonate, sodium perfluorooctyl sulfonate, potassium perfluorobutyl sulfonate, potassium perfluorohexyl sulfonate, potassium perfluorooctyl sulfonate, calcium perfluoromethane sulfonate, rubidium perfluorobutyl sulfonate, rubidium perfluorohexyl sulfonate, cesium trifluoromethyl sulfonate, cesium perfluoroethyl sulfonate, cesium perfluorohexyl sulfonate, and cesium perfluorooctyl sulfonate.

9. The polycarbonate resin composition of claim 1, wherein the phenyl methyl silicone oil is represented by the following Chemical Formula 3: 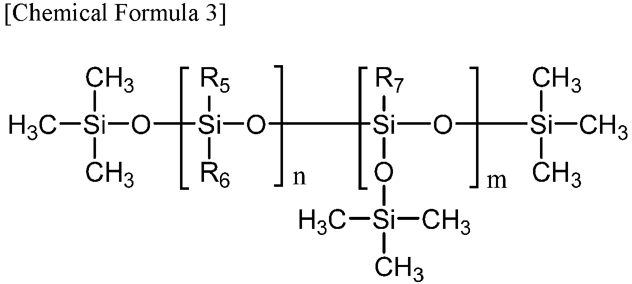 in Chemical Formula 3,
R₅ and R₆ are each independently C₁₋₁₀ alkyl, C₁₋₁₀ alkenyl, or C₆₋₁₀ aryl,
R₇ is phenyl,
n is an integer of 0 to 10, and
m is an integer of 1 to 10.

10. The polycarbonate resin composition of claim 9, wherein the Chemical Formula 3 is represented by the following Chemical Formula 3-1: 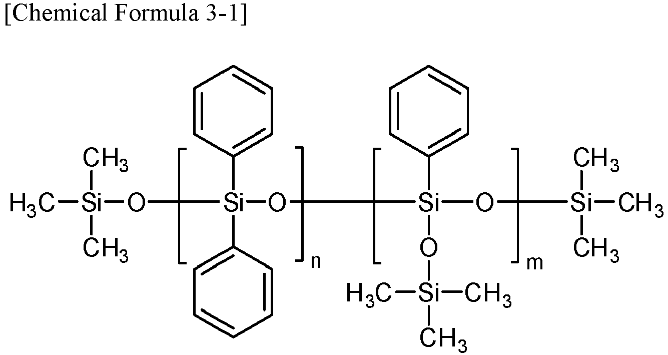 in Chemical Formula 3-1, n and m are the same as defined in Chemical Formula 3.

11. The polycarbonate resin composition of claim 1, wherein the phenyl methyl silicone resin is a network structured polyorganosiloxane resin including phenyl and methyl substituents in a solid-phase.

12. The polycarbonate resin composition of claim 1, further comprising, based on 100 parts by weight of the linear polycarbonate resin and the branched polycarbonate resin,
(f) 0.05 parts by weight to 0.2 parts by weight of an epoxy-based hydrolysis-resistant agent; and
(g) 0.1 part by weight to 0.5 parts by weight of a UV absorber.

13. The polycarbonate resin composition of claim 12, wherein the epoxy-based hydrolysis-resistant agent includes a structure in which an epoxy group is fused into an aliphatic ring.

14. The polycarbonate resin composition of claim 12, wherein the UV absorber is one or more selected from the group consisting of a benzotriazole compound, a benzophenone compound, an oxanilide compound, a benzoic acid ester compound, and a triazine compound.

15. A molded article comprising the polycarbonate resin composition of any one of claims 1 to 14.

## Patentansprüche

1. Polycarbonatharzzusammensetzung, welche umfasst:
a) ein lineares Polycarbonatharz, das eine erste durch die folgende chemische Formel 1 dargestellte Wieder holungseinheit einschließt;
b) ein verzweigtes Polycarbonatharz, das eine erste durch die folgende chemische Formel 1 dargestellte Wiederholungseinheit einschließt;
basierend auf 100 Gewichtsteilen des linearen Polycarbonatharzes und des verzweigten Polycarbonatharzes
c) 0,04 Gewichtsteile bis 0,15 Gewichtsteile eines Metallsalzes auf Basis von fluoriertem Sulfonat;
d) 1,5 Gewichtsteile bis 5,0 Gewichtsteile Phenylmethylsilikonöl mit einer kinematischen Viskosität von 5 mm²/ sek bis 60 mm²/ sek bei 25°C; und
e) 0,05 Gewichtsteile bis 0,2 Gewichtsteile eines Phenylmethylsilikonharzes; 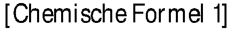 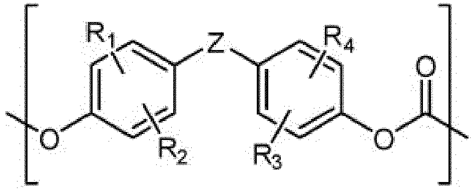 wobei in chemischer Formel 1
R¹ bis R⁴ jeweils unabhängig Wasserstoff, C₁₋₁₀-Alkyl, C₁₋₁₀-Alkoxy oder Halogen sind, und
Z unsubstituiertes oder mit Phenyl substituiertes C₁₋₁₀-Alkylen, unsubstituiertes oder mit C₁₋₁₀-Alkyl substituiertes C₃₋₁₅-Cycloalkylen, O, S, SO, SO₂ oder CO ist.

2. Polycarbonatharzzusammensetzung nach Anspruch 1, wobei die erste durch chemische Formel 1 dargestellte Wiederholungseinheit abgeleitet ist von einer oder mehreren aromatischen Diolverbindungen, die ausgewählt sind aus der Gruppe bestehend aus Bis(4-hydroxyphenyl)methan, Bis(4-hydroxyphenyl)ether, Bis(4-hydroxyphenyl)sulfon, Bis(4-hydroxyphenyl)sulfoxid, Bis(4-hydroxyphenyl)sulfid, Bis(4-hydroxyphenyl)keton, 1,1-Bis(4-hydroxyphenyl)ethan, Bisphenol A, 2,2-Bis(4-hydroxyphenyl)butan, 1,1-Bis(4-hydroxyphenyl)cyclohexan, 2,2-Bis(4-hydroxy-3,5-dibromphenyl)propan, 2,2-Bis(4-hydroxy-3,5-dichlorphenyl)propan, 2,2-Bis(4-hydroxy-3-bromphenyl)propan, 2,2-Bis(4-hydroxy-3-chlorphenyl)propan, 2,2-Bis(4-hydroxy-3-methylphenyl)propan, 2,2-Bis(4-hydroxy-3,5-dimethylphenyl)propan, 1,1-Bis(4-hydroxyphenyl)-1-phenylethan, Bis(4-hydroxyphenyl)diphenylmethan, und a,ω-Bis[3-(o-hydroxyphenyl)propyl]polydimethylsiloxan.

3. Polycarbonatharzzusammensetzung nach Anspruch 1, wobei die erste durch chemische Formel 1 dargestellte Wiederholungseinheit durch die folgende chemischen Formel 1-2 dargestellt ist:

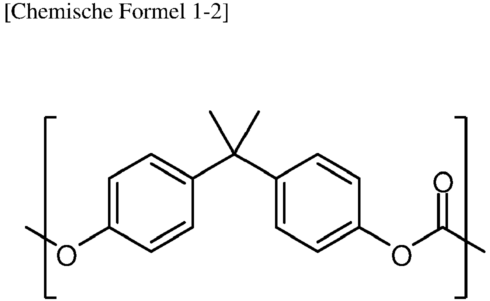

4. Polycarbonatharzzusammensetzung nach Anspruch 1, wobei das verzweigte Polycarbonatharz die erste durch chemische Formel 1 dargestellte Wiederholungseinheit und eine dreiwertige oder vierwertige zweite Wiederholungseinheit, die eine Vielzahl der ersten Wiederholungseinheiten miteinander verbindet, einschließt.

5. Polycarbonatharzzusammensetzung nach Anspruch 4, wobei die zweite Wiederholungseinheit abgeleitet ist von einem oder mehreren Verzweigungsmitteln, die ausgewählt sind aus der Gruppe bestehend aus 1,1,1-Tris(4-hydroxyphenyl)ethane, 1,3,5-Tris-(2-Hydroxyethyl)cyanursäure, 4,6-Dimethyl-2,4,6-tris-(4-hydroxyphenyl)-heptan-2,2,2-bis[4,4'-(dihydroxyphenyl)cyclohexyl]propan, 1,3,5-Trihydroxybenzen, 1,2,3-Trihydroxybenzen, 1,4-Bis-(4',4"-dihydroxytriphenylmethyl)-benzen, 2',3',4'-Trihydroxyacetophenon, 2,3,4-Trihydroxybenzoesäure, 2,3,4,-Trihydroxybenzophenon, 2,4,4'-Trihydroxybenzophenon, 2',4',6'-Trihydroxy-3-(4-hydroxyphenyl)propiophenon, Pentahydroxyflavon, 3,4,5-Trihydroxyphenylethylamin, 3,4-Trihydroxyphenylethylalcohol, 2,4,5-Trihydroxypyrimidin, Tetrahydroxy-1,4-chinon-hydrat, 2,2',4,4'-Tetrahydroxybenzophenon und 1,2,5,8-Tetrahydroxyanthrachinon.

6. Polycarbonatharzzusammensetzung nach Anspruch 4, wobei die zweite Wiederholungseinheit durch die folgende chemische Formel 2-1 dargestellt ist:

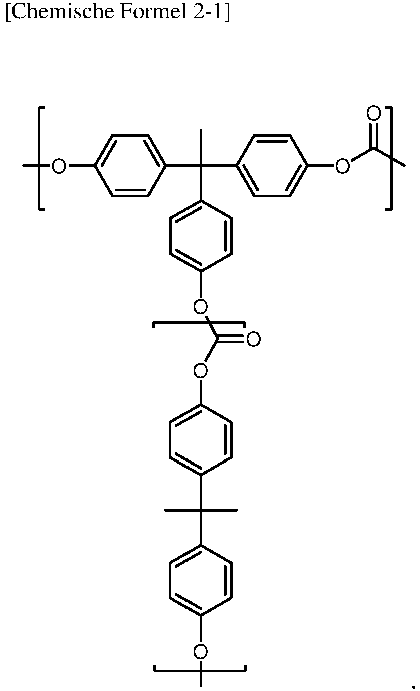

7. Polycarbonatharzzusammensetzung nach Anspruch 1, wobei das lineare Polycarbonatharz in einer Menge von 50 Gew.-% bis 80 Gew.-% und das verzweigte Polycarbonatharz in einer Menge von 20 Gew.-% bis 50 Gew.-%, basierend auf dem Gesamtgewicht des linearen Polycarbonatharzes und des verzweigten Polycarbonatharzes, eingeschlossen ist.

8. Polycarbonatharzzusammensetzung nach Anspruch 1, wobei das Metallsalz auf Basis von fluoriertem Sulfonat eines oder mehrere ist, ausgewählt aus der Gruppe bestehend aus Natriumtrifluormethylsulfonat, Natriumperfluorethylsulfonat, Natriumperfluorbutylsulfonat, Natriumperfluorheptylsulfonat, Natriumperfluoroctylsulfonat, Kaliumperfluorbutylsulfonat, Kaliumperfluorhexylsulfonat, Kaliumperfluoroctylsulfonat, Calciumperfluormethansulfonat, Rubidiumperfluorbutylsulfonat, Rubidiumperfluorhexylsulfonat, Cäsiumtrifluormethylsulfonat, Cäsiumperfluorethylsulfonat, Cäsiumperfluorhexylsulfonat und Cäsiumperfluoroctylsulfonat.

9. Polycarbonatharzzusammensetzung nach Anspruch 1, wobei das Phenylmethylsilikonöl durch die folgende chemische Formel 3 dargestellt ist: 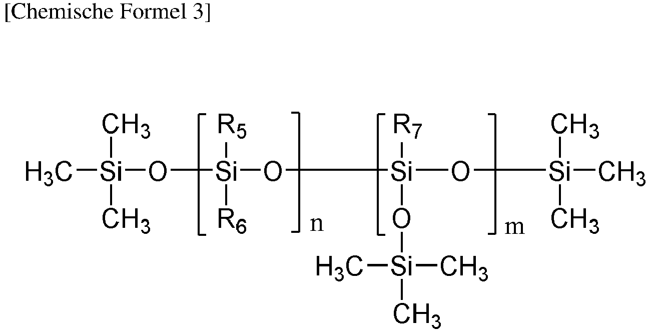 wobei in chemischer Formel 3
R₅ und R₆ jeweils unabhängig C₁₋₁₀-Alkyl, C₁₋₁₀-Alkenyl oder C₆₋₁₀-Aryl sind,
R₇ Phenyl ist,
n eine ganze Zahl von 0 bis 10 ist, und
m eine ganze Zahl von 1 bis 10 ist.

10. Polycarbonatharzzusammensetzung nach Anspruch 9, wobei die chemische Formel 3 durch die folgende chemische Formel 3-1 dargestellt ist: 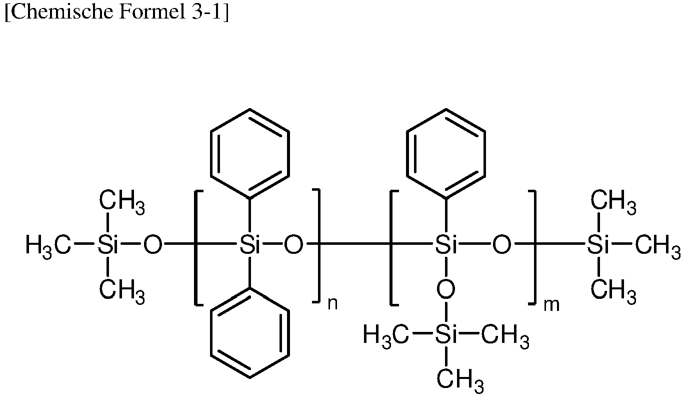 wobei in chemischer Formel 3-1 n und m die gleichen sind wie sie in chemischer Formel 3 definiert sind.

11. Polycarbonatharzzusammensetzung nach Anspruch 1, wobei das Phenylmethylsilikonharz ein Netzwerk-strukturiertes Polyorganosiloxanharz ist, das Phenyl- und Methyl-Substituenten in einer Festphase einschließt.

12. Polycarbonatharzzusammensetzung nach Anspruch 1, weiter umfassend, basierend auf 100 Gewichtsteilen des linearen Polycarbonatharzes und des verzweigten Polycarbonatharzes,
(f) 0,05 Gewichtsteile bis 0,2 Gewichtsteile eines Hydrolyse-beständigen Mittels auf Epoxybasis; und
(g) 0,1 Gewichtsteile bis 0,5 Gewichtsteile eines UV-Absorbers.

13. Polycarbonatharzzusammensetzung nach Anspruch 12, wobei das Hydrolyse-beständige Mittel auf Epoxybasis eine Struktur einschließt, bei der eine Epoxygruppe in einem aliphatischen Ring kondensiert ist.

14. Polycarbonatharzzusammensetzung nach Anspruch 12, wobei der UV-Absorber einer oder mehrere ist, ausgewählt aus der Gruppe bestehend aus einer Benzotriazolverbindung, einer Benzophenonverbindung, einer Oxanilidverbindung, einer Benzoesäureesterverbindung und einer Triazinverbindung.

15. Formkörper, umfassend die Polycarbonatharzzusammensetzung nach einem der Ansprüche 1 bis 14.

## Revendications

1. Composition de résine polycarbonate comprenant :
(a) une résine polycarbonate linéaire incluant une première unité de répétition représentée par la Formule chimique 1 ci-après ;
(b) une résine polycarbonate ramifiée incluant une première unité de répétition représentée par la Formule chimique 1 ci-après ;
sur la base de 100 parties en poids de la résine polycarbonate linéaire et de la résine polycarbonate ramifiée,
(c) entre 0,04 partie en poids et 0,15 partie en poids d'un sel métallique à base de sulfonate fluoré ;
(d) entre 1,5 partie en poids et 5,0 parties en poids d'huile de silicone de méthyle phényle ayant une viscosité cinématique comprise entre 5 mm²/s et 60 mm²/s at 25°C; et
(e) entre 0,05 partie en poids et 0,2 partie en poids d'une résine de silicone de méthyle phényle ; 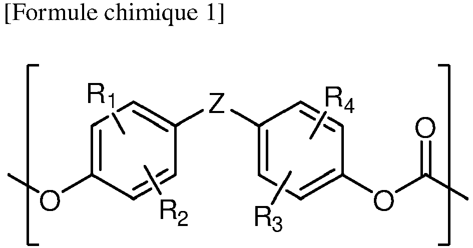 dans la Formule chimique 1,
R₁ à R₄ sont chacun indépendamment un hydrogène, un alkyle en C₁₋₁₀, un alkoxy en C₁₋₁₀ ou un halogène et
Z est un alkylène en C₁₋₁₀ non substitué ou substitué par un phényle, un cycloalkylène en C₃₋₁₅ non substitué ou substitué par un alkyle en C₁₋₁₀, O, S, SO, SO₂ ou CO.

2. Composition de résine polycarbonate selon la revendication 1, dans laquelle la première unité de répétition représentée par la Formule chimique 1 est dérivée d'un ou plusieurs composés de diols aromatiques sélectionnés dans le groupe constitué de bis(4-hydroxyphényl)méthane, bis(4-hydroxyphényl)éther, bis(4-hydroxyphényl)sulfone, bis(4-hydroxyphényl)sulfoxyde, bis(4-hydroxyphényl)sulfure, bis(4-hydroxyphényl)cétone, 1,1-bis(4-hydroxyphényl)éthane, bisphénol A, 2,2-bis(4-hydroxyphényl)butane, 1,1-bis(4-hydroxyphényl)cyclohexane, 2,2-bis(4-hydroxy-3,5-dibromophényl)propane, 2,2-bis(4-hydroxy-3,5-dichlorophényl)propane, 2,2-bis(4-hydroxy-3-bromophényl)propane, 2,2-bis(4-hydroxy-3-chlorophényl)propane, 2,2-bis(4-hydroxy-3-méthylphényl)propane, 2,2-bis(4-hydroxy-3,5-diméthylphényl)propane, 1,1-bis(4-hydroxyphényl)-1-phényléthane, bis(4-hydroxyphényl)diphénylméthane et a,ω-bis[3-(o-hydroxyphényl)propyl]polydiméthylsiloxane.

3. Composition de résine polycarbonate selon la revendication 1, dans laquelle la première unité de répétition représentée par la Formule chimique 1 est représentée par la Formule chimique 1-2 ci-après :

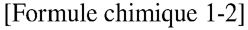

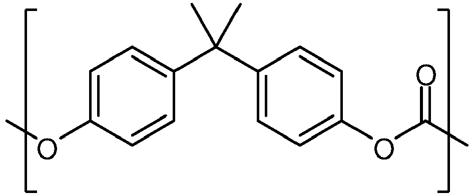

4. Composition de résine polycarbonate selon la revendication 1, dans laquelle la résine polycarbonate ramifiée inclut la première unité de répétition représentée par la Formule chimique 1 et une deuxième unité de répétition trivalente ou tétravalente reliant une pluralité des premières unités de répétition l'une à l'autre.

5. Composition de résine polycarbonate selon la revendication 4, dans laquelle la deuxième unité de répétition est dérivée d'un ou plusieurs agents de ramification sélectionnés dans le groupe constitué de 1,1,1-tris(4-hydroxyphényle)éthane, acide 1,3,5-tris-(2-hydroxyéthyle)cyanurique, 4,6-diméthyle-2,4,6-tris-(4-hydroxyphényle)-heptane-2,2,2-bis[4,4'-(dihydroxyphényle)cyclohexyle]propane, 1,3,5-trihydroxybenzène, 1,2,3-trihydroxybenzène, 1,4-bis-(4',4"-dihydroxytriphényle méthyle)-benzène, 2',3',4'-trihydroxyacétophénone, acide 2,3,4-trihydroxybenzoïque, 2,3,4,-trihydroxybenzophénone, 2,4,4'-trihydroxybenzophénone, 2' ,4' ,6' -trihydroxy-3-(4-hydroxyphényl)propiophénone, pentahydroxyflavone, 3,4,5-trihydroxyphényléthylamine, 3,4-trihydroxyphényléthylalcool, 2,4,5-trihydroxypyrimidine, hydrate de tétrahydroxy-1,4-quinone, 2,2',4,4'-tétrahydroxybenzophénone et 1,2,5,8-tétrahydroxyanthraquinone.

6. Composition de résine polycarbonate selon la revendication 4, dans laquelle la deuxième unité de répétition est représentée par la Formule chimique 2-1 ci-après :

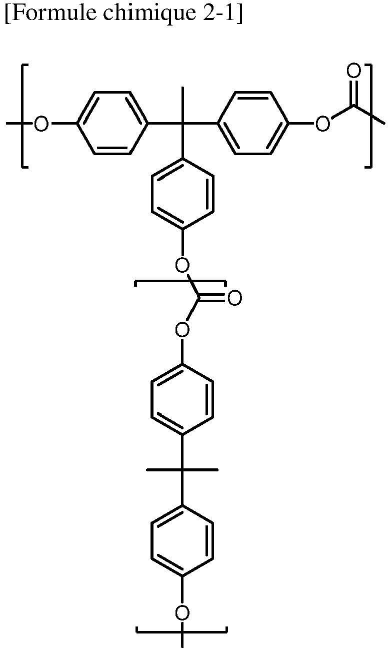

7. Composition de résine polycarbonate selon la revendication 1, dans laquelle la résine polycarbonate linéaire est incluse dans une quantité comprise entre 50% en poids et 80% en poids et la résine polycarbonate ramifiée est incluse dans une quantité comprise entre 20% en poids et 50% en poids, sur la base du poids total de la résine polycarbonate linéaire et de la résine polycarbonate ramifiée.

8. Composition de résine polycarbonate selon la revendication 1, dans laquelle le sel métallique à base de sulfonate fluoré est un ou plusieurs éléments sélectionnés dans le groupe constitué de sulfonate de trifluorométhyle de sodium, sulfonate de perfluoroéthyle de sodium, sulfonate de perfluorobutyle de sodium, sulfonate de perfluoroheptyle de sodium, sulfonate de perfluorooctyle de sodium, sulfonate de perfluorobutyle de potassium, sulfonate de perfluorohexyle de potassium, sulfonate de perfluorooctyle de potassium, sulfonate de perfluorométhane de calcium, sulfonate de perfluorobutyle de rubidium, sulfonate de perfluorohexyle de rubidium, sulfonate de trifluorométhyle de césium, sulfonate de perfluoroéthyle de césium, sulfonate de perfluorohexyle de césium et sulfonate de perfluorooctyle de césium.

9. Composition de résine polycarbonate selon la revendication 1, dans laquelle l'huile de silicone de méthyle phényle est représentée par la Formule chimique 3 ci-après : 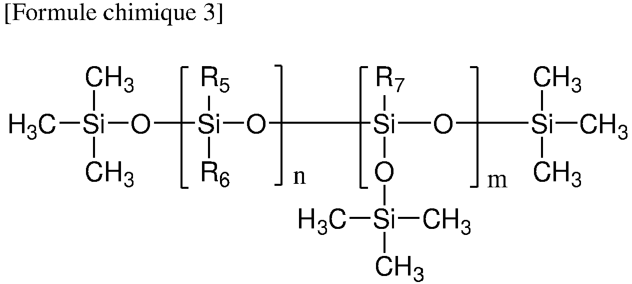 dans la Formule chimique 3,
R₅ et R₆ sont chacun indépendamment un alkyle en C₁₋₁₀, un alkényle en C₁₋₁₀ ou un aryle en C₆₋₁₀,
R₇ est un phényle,
n est un nombre entier de 0 à 10, et
m est un nombre entier de 1 à 10.

10. Composition de résine polycarbonate selon la revendication 9, dans laquelle la Formule chimique 3 est représentée par la Formule chimique 3-1 ci-après : 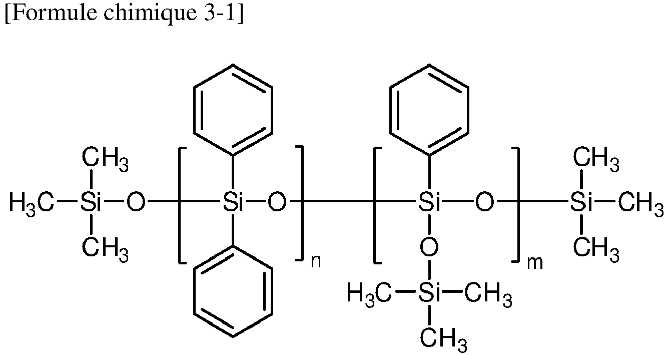 dans la Formule chimique 3-1, n et m sont identiques à ceux définis dans la Formule chimique 3.

11. Composition de résine polycarbonate selon la revendication 1, dans laquelle la résine de silicone de méthyle phényle est une résine de polyorganosiloxane structurée en réseau incluant des substituant phényle et méthyle en phase solide.

12. Composition de résine polycarbonate selon la revendication 1, comprenant en outre, sur la base de 100 parties en poids de la résine polycarbonate linéaire et de la résine polycarbonate ramifiée,
(f) entre 0,05 partie en poids et 0,2 partie en poids d'un agent résistant à l'hydrolyse à base d'époxy ; et
(g) entre 0,1 partie en poids et 0,5 partie en poids d'un absorbeur d'UV.

13. Composition de résine polycarbonate selon la revendication 12, dans laquelle l'agent résistant à l'hydrolyse à base d'époxy inclut une structure dans laquelle un groupe époxy est fusionné dans un cycle aliphatique.

14. Composition de résine polycarbonate selon la revendication 12, dans laquelle l'absorbeur d'UV est un ou plusieurs éléments sélectionnés dans le groupe constitué d'un composé de benzotriazole, un composé de benzophénone, un composé d'oxanilide, un composé d'ester d'acide benzoïque et un composé de triazine.

15. Article moulé comprenant la composition de résine polycarbonate selon l'une quelconque des revendications 1 à 14.
